# EUROPEAN PATENT APPLICATION

(11) **EP 0 783 148 A2**
(43) Date of publication of application: **09.07.1997**
(21) Application number: 96114708.9
(22) Date of filing: 12.09.1996
(51) Int. Cl.: G06F 1/32

(54) **Power conserving clocking system**

(30) Priority: 22.12.1995 GB 9526315
(71) Applicant: MOTOROLA, INC., Schaumburg, IL 60196 (US)
(72) Inventor: Smolyansky, Leonid, Or-Akiva 30600 (IL); Kowal, Shai, Ramat Gan 52297 (IL); Goren, Avner, Rosh Haayin 40800 (IL); Galanti, David, Natanya (IL)
(74) Representative: Hudson, Peter David

(57) **Abstract**

Power consumption of a modular system (40) coupled by a bus (48) is reduced by separating the module (44) clock into two parts: (i) a low power clock (56) which provides a substantially continuous signal (100) and drives the module access logic (60), and (ii) a high power main clock driver (72) that operates only when the module (44) has detected its own address. When the access logic (60) detects the module address (104), it causes an enable/disable circuit (68) to turn on the main clock driver (72) supplying the module function logic (64), which then reads or writes to the bus (48) or performs other operations according to its internal programming or control signals on the bus (48) or both. When finished, the function logic (64) sends a shut-down signal (120) to the enable/disable circuit (68) to terminate operation of the main clock driver (72). The module returns (44) to its quiescent state until receipt of the next address event (104).

## Description

### Field of the Invention

The present invention relates to arrangements for providing clock signals in portions of a system coupled by a bus and, more particularly, arrangements for conserving clock power therein when such system portions are inactive.

### Background of the Invention

It is common in electronic systems to utilize recurring electrical signals for timing purposes. These signals are referred to as "clocks". In a typical system, certain events, e.g., read data, write data, transfer data, read address, write address, shift address, etc., are usually constrained to occur during certain time periods defined by the clock. It is common to have systems which employ various buses over which information, such as, commands, control information, data, addresses, etc., are transferred to and from various electronic modules that perform certain specific functions. One or more of these modules can be a master controller or central processor and others can be slaves to the master controller, or some modules may have both master and slave functions depending upon the instructions being executed. Frequently, a system can have multiple clocks operating at one or more frequencies. As for example, modules can have an internal clock that is or is not synchronized with the clocks in other modules. Sometimes the system has a master clock which is fed to some or all modules. The bus often operates at a clock rate that is substantially slower than the master or module clocks. As used herein, the word "module" or "modules" is intended to include any electronic function that has access to a bus via which information or other signals are communicated. A module can be a separate component or combination of components in a system or a portion of a complex microchip or a combination thereof.

Some modules are only accessed infrequently. When the local clock in such a module runs continuously, as is often the circumstance in the prior art, substantial amounts of power are consumed even though the unaddressed module is performing no activity. In the prior art, this has been avoided by providing special signal lines running to the module to permit the module clock to be turned off when the module is not required to be active. In general, a separate line or combination of lines is required for each module. However, this solution is not possible in situations where, for example, due to limitations in the number of connections to the module, additional control lines are not available for this purpose. Thus, there continues to be a need for an improved system which reduces power consumption by inactive modules without requiring additional control lines running to the modules.

### BRIEF DESCRIPTION OF THE DRAWINGS

FIG. 1 is a simplified schematic block diagram of a system employing electronic modules, according to the prior art;
FIG. 2 is a simplified schematic block diagram of a system employing electronic modules, according to a preferred embodiment of the present invention; and
FIG. 3 is a simplified timing diagram illustrating operation of the system of FIG. 2.

### DETAILED DESCRIPTION OF THE DRAWINGS

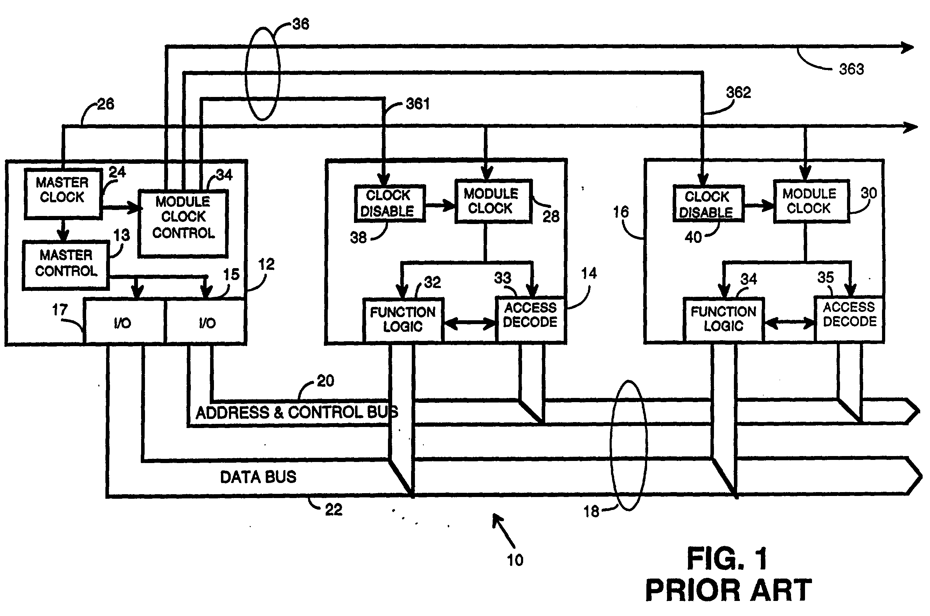

FIG. 1 is a simplified schematic block diagram of system 10 employing electronic modules 12, 14, 16, according to the prior art. Modules 12, 14, 16 are coupled by bus 18. Bus 18 comprises address lines 20, and data 22. Control signals can also be included in bus 18. For simplicity of explanation, module 12 is assumed to be a central control module and modules 14, 16 are assumed to be modules performing other logic functions, the exact nature of which is not important. Module 12 contains master control 13 which provides addresses via I/O 15 to address bus 20 and data via I/O 17 to bus 22. Modules 12 has master clock 24 which provides a master clock signal on line 26 to modules 14, 16, etc., so that module clocks 28, 30 in modules 14, 16, respectively, are maintained in synchronization with master clock 24 in module 12. Local clocks 28, 30 control local function logic 32, 34 within modules 14, 16, respectively. Modules 14, 16 also contain access decode circuits 33, 35 which detect when the predetermined module address is present on bus 20 indicating that data on bus 22 are intended for that module. Function logic 32, 34 operates on the data and/or control signals provided by bus 18 according to instructions stored within the module or the control signals received from bus 18 or by other means, or a combination thereof.

A disadvantage of the above-described prior art systems is that module clocks 28, 30 run substantially continuously (e.g., while system 10 is in operation), independent of whether modules 14, 16 are active, e.g., performing logical functions. With systems having modules that are inactive part of the time, this results in a significant waste of power since clocks 28, 30 must drive the inherent capacitance of function logic 32, 34, even though function logic 32, 34 is inactive.

In the prior art, this problem has been overcome by providing module clock control circuit 34, in for example module 12, coupled by lines 36 to clock disable circuits 38, 40 in modules 14, 16 and to such other modules as it is desired to inactivate. By sending a separate signal over clock control line 361, module clock 28 can be shut off when module 14 is to be dormant, and activated when it is desired to be active. Similarly with module 16 using clock control line 362 and other modules (not shown) using control line 363, etc.

While the foregoing approach reduces quiescent power consumption by modules 14, 16, it suffers from several disadvantages. First, it is not practical when modules 12, 14, or 16 have insufficient I/O pins available, that is, when no pins are available to serve as clock control lines 36. Second, even when there are sufficient I/O pins available, this solution can degrade overall system performance because there is a necessary time penalty associated with the settling time of local module clocks 28, 30 after they are turned on by the signals provided on clock control lines 36.

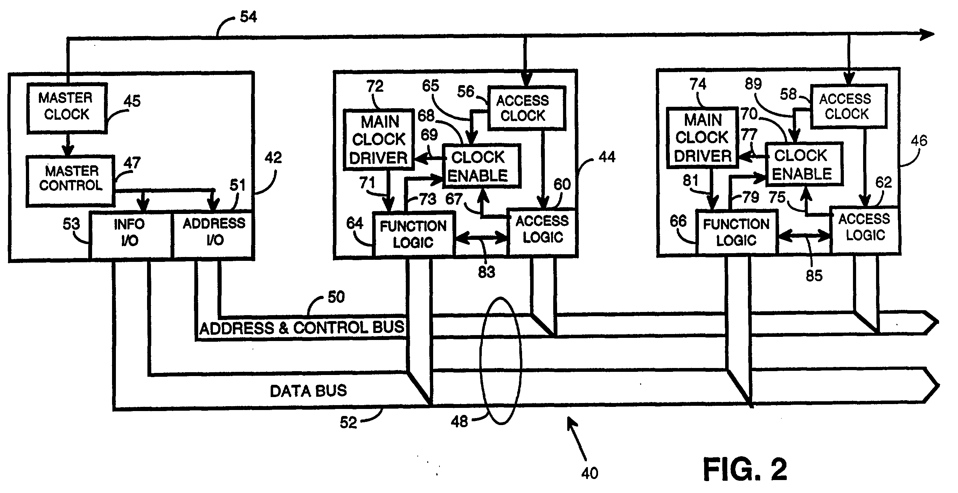

The foregoing and other problems are overcome by the invented arrangement illustrated in FIG. 2. FIG. 2 is a simplified schematic block diagram of system 40 employing electronic modules 42, 44, 46, according to a preferred embodiment of the present invention. Modules 42, 44, 46 are analogous to modules 12, 14, 16 and are intended to be representative of any type of logical function. Modules 42, 44, 46 are coupled by bus 48 comprising address lines 50 and information lines 52. Control signals can also be provided via bus 48. The number of address and information lines in bus 48 is generally determined by system considerations. For simplicity of explanation, and not intended to be limiting, module 42 is assumed to be a master control module having master clock 45 for supplying a master clock signal to modules 44, 46 along line 54, but this is not essential. Modules 44, 46 are assumed to be modules performing various logical functions according to their internal construction and programming. The exact nature of the logical operations performed by modules 42, 44, 46 is not important to the present invention. Modules 42, 44, 46 can be portions of a single microchip or individual microchips or combinations of microchips with or without other electronic components, according to the complexity of the system being constructed by the user. Modules 42, 44, 46 are not coupled by control lines analogous to clock control lines 36 in FIG. 1, either separately or as a part of bus 48. Module 42 has, for purposes of explanation and not intended to be limiting, master control 47 for generating addresses (e.g., and control signals) and coupling them to bus 50 through address I/O 51, and for generating information signals and coupling them to data bus 52 via Info I/O 53.

Representative modules 44, 46 comprise local access clock 56, 58 which, for convenience but not essentially, can receive a master clock signal along line 54. Local access clock 56, 58 can be merely a driver transmitting the master clock signal or an independent clock source which may or may not be synchronized to master clock 45. Access clock sources 56, 58 are intended to run substantially continuously, as for example, whenever system 40 or the relevant portion of system 40 is desired to be available. The present invention applies even under circumstances when through bank switching or other means, some portions of system 40 may be inactivated under circumstances where the functions performed by such portions are not needed.

Access clock sources 56, 58 control the operation of access logic 60, 62 in modules 44, 46, respectively. Access logic 60, 62 is coupled to address lines 50 of bus 48. Access logic 60, 62 is substantially continuously active, so as to monitor bus 48 for an address signal matching the predetermined address stored in each module. In general, access logic 60, 62 is much simpler than function logic 64, 66 and, therefore, their inherent capacitive loading on access clock sources 56, 58 is much less than what would be present were access clock sources 56, 58 also directly supplying function logic 64, 66.

Access logic 60, 62 is coupled to clock enable circuit 68, 70 via line 67, 75, respectively. Clock enable circuit 68, 70 is coupled to main module clock driver 72, 74 via line 69, 77, respectively. When, for example, access logic 60 in module 44 detects the presence of its predetermined address on bus 48, it provides an output signal on line 67 to clock enable circuit 68 which turns on main clock driver 72 via line 69 so that logical function 64 of module 44 receives the main clock signal via line 71 and becomes active.

Clock driver 72, 74 is conveniently a driver stage providing sufficient power to drive the inherent capacitive load of logical function 64, 66. It is not necessary that clock driver 72, 74 be an independent oscillator clock source although that is not precluded. When clock driver 72, 74 is not an independent oscillatory generator, there is no time delay for clock settling since substantially continuously running access clock 56, 58 can provide a fully synchronized timing source to clock driver 72, 74 via lines 65, 89 and 69, 77, or directly (not shown). When access clock 56, 58 is independent of master clock 54, the enable signal on lines 67, 75 and 69, 77 generated by access logic 60, 62 is synchronized to continuously running access clock 56, 58, thus providing a synchronized timing source for main clock drivers 72, 74. Clock driver 72, 74 can generally be turned on within the time required to have valid data, control or other signals on bus 48, so there is no loss of system speed from employing the invented arrangement.

When function logic 64, 66 has completed the programmed operation, it sends a signal via line 73, 79 to clock enable 68, 70 or clock driver 72, 74 to turn off the clock signal to function logic 64, 66, at which point the clock power dissipation in module 44, 46 is minimized. As those of skill in the art will understand based on the description herein, clock enable 68, 70 can turn on and off other functions within the module as well, so that the module as a whole can power down, except for access clock 56, 58 and access logic 60, 62 which remains active to detect subsequent address events.

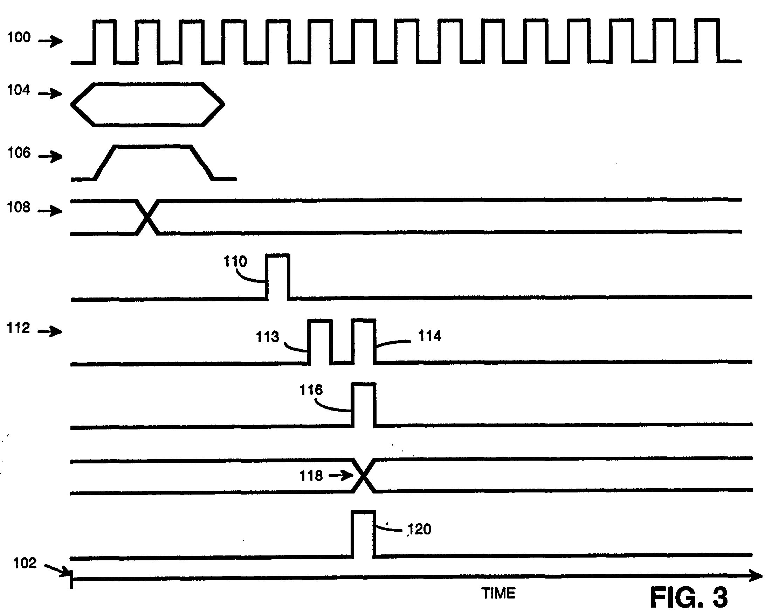

FIG. 3 is a simplified timing diagram illustrating the operation of the system of FIG. 2 for purposes of understanding and not intended to be limiting. As those of skill in the art will understand based on the description herein, many other types of signals can be transmitted on bus 48 and other types of logical operations performed. For convenience, reference will be made only to the operation of module 44, but this is understood to be representative of any module.

Referring now to FIGS. 2 and 3, module 44 is presumed to initially be in an inactive state, that is, it is not addressed and any previous logical function that it was called upon to perform has already been completed. Module access clock 56 is substantially continuously running, as depicted at 100. At time 102, the address (and for example, desired control signals) for module 44 appears on bus 48, as indicated at 104, and is detected by access logic 60 operating under the control of access clock 56. Host write strobe 106 on bus 48 indicates that data 108 on bus 48 is valid. Access logic 60 provides "start function" signal 110 to clock enable circuit 68 which turns on or enables main clock driver 72 supplying "function clock" signal 112 to function logic 64.

Function logic 64 operating under the control of first cycle 113 of function clock signal 112 to, for example, read in data 108 or whatever other information is present on bus 48. Any necessary control instructions are read from/to bus 48, for example, at the same time. Whatever logical operation or sub operation called for by the programming of module 44 and/or any control signals received via bus 48 is then performed. In the example shown in FIG. 3, data transfer strobe 116 issued by function logic 64 during second cycle 114 of function clock 112 causes data 108 to be written in a data register (not shown in FIG. 2) as indicated by step 118. In the example of FIG. 3, this completes the logical operation performed by function logic 64 as a consequence of address event 104 and function logic 64 provides shut-down signal 120 on feedback line 73 to disable main clock driver 72. No further cycles of function clock 112 occur, thereby eliminating the power drain caused thereby. Module 44 is quiescent until access logic circuit 60 again detects the predetermined address of module 44.

Persons of skill in the art will understand based on the explanation herein that FIG. 3 and the operation of module 44 described in connection therewith are merely an example for convenience of explanation and not intended to be limiting. The function performed by module 44 or any other module can be simple or complex according to the needs of the system. The invented arrangement still applies.

While the foregoing example illustrates the operation of the present invention for a situation wherein module 44 is receiving an address from master controller 12, module 44 or any other module having access clock 56, access logic 60, enable circuit 68 and clock driver 72 or equivalent can also act as an address source, wherein function logic 64 issues an address of another module onto bus 48 while it is still active and before it has sent main module clock disable signal 112 along line 73 to shut down main module clock driver 72.

Analysis performed on a digital signal processor system shows that the present invention can reduce ambient power consumption of modules by up to 85%. The importance of saving power in complex systems is best appreciated by understanding that the level of complexity that can be achieved in a single microchip or in a system is often limited by the amount of power that is dissipated by the microchip or system. Thus, reducing the power consumption of infrequently used modules permits a much greater level of integration to be obtained with a consequent improvement in performance and saving in cost. Further, many systems are used in portable, battery operated applications, where the power drain of the system is an important factor in overall utility because of its direct impact on how long the system can run between battery charges.

Based on the description herein it will be apparent to those of skill in the art that the present invention applies to all systems in which there are sub-systems or modules that need not be constantly active and where there is a shortage of signal lines so as to preclude devoting such lines exclusively to the control of module clocks. The present invention makes it possible to turn such modules on or off to conserve power or for other reasons, using the same address lines and substantially the same address decode logic that must be present within the modules for their ordinary functions. By separating the circuitry that supplies clock signals to the access logic and to the function logic of the module, and by providing an enable/disable circuit for the main (function logic) clock, which enable/disable circuit operates under the control of the access logic, this power saving is achieved at negligible difference in module complexity and without use of any special or additional clock control lines. This is a valuable advantage with important practical uses.

## Claims

1. An electronic system (40), comprising, at least first (42) and second (44) modules for performing electronic functions, a bus (48) for providing common signal transfer including at least addresses between the at least first (42) and second (44) modules, wherein at least one of the first (42) and second (44) modules comprises (i) an access clock (56) able to provide a first clock signal, (ii) access control logic (60) operated by the first clock signal to detect the presence of a predetermined address on the bus (48) and to generate in response to detection of the predetermined address a "main clock enable" signal, (iii) a main clock driver (72) coupled to the access control logic (60) for providing a main clock signal in response to the main clock enable signal, and (iv) function logic (64) coupled to the bus (48) and to the main clock driver (72) for performing a logical operation in response to the main clock signal.

2. The electronic system of claim 1 wherein the function logic (64), after performing the logical operation, further provides a "main clock disable" signal to disable the main clock driver (72).

3. The electronic system of claim 2 wherein the "main clock disable" signal is provided automatically on completion of the logical operation being performed by the function logic (64).

4. The electronic system of claim 1 wherein the access clock (56) provides a substantially continuously running first clock signal and the main clock signal is off during an interval between the "main clock disable" signal and a further "main clock enable" signal.

5. The electronic system of claim 1 wherein the main clock signal is initiated by the "main clock enable" signal within a time during which information on the bus (48) is valid.

6. The electronic system of claim 1 wherein the main clock signal is synchronized with the first clock signal.

7. The electronic system of claim 1 wherein the first clock signal is synchronized with a master clock signal received by the at least one of the first (42) and second (44) modules from another of the first (42) and second (44) modules.

8. A modular electronic system (40) having multiple electronic modules (44, 46) coupled by a bus (48), wherein at least one module (44) comprises: (i) a low power clock (56) which provides a substantially continuous signal (100), (ii) access logic (60) coupled to the low power clock (56) and the bus (48) for determining when the at least one module (44) has been addressed, (iii) a higher power main clock (72), (iv) a main clock enable circuit (68) coupled to the access logic (60) and the higher power main clock (72), and (v) a functional logic circuit (64) for performing a logical function, wherein the higher power main clock operates only when the access logic (60) has detected the address (104) of the at least one module (44) and provides an "enable" signal (110) to the enable circuit (68) to turn on the higher power main clock (72) for supplying a higher power main clock signal (112) to the functional logic (64) so that the functional logic (64) performs a logical function and then sends a "disable" signal (120) to the enable circuit (68) to shut down the higher power main clock (72) upon completion of the logical function.
